# EUROPEAN PATENT SPECIFICATION

(11) **EP 4 700 732 B1**
(45) Date of publication and mention of the grant of the patent: **04.11.2026**
(21) Application number: 24938121.1
(22) Date of filing: 17.05.2024
(51) Int. Cl.: G06V 20/52, G06V 10/141, G06V 40/10, G08B 13/181

(54) **MONITORING DEVICE**
ÜBERWACHUNGSEINRICHTUNG
DISPOSITIF DE SURVEILLANCE

(43) Date of publication of application: 25.02.2026
(73) Proprietor: Optex Co., Ltd., Otsu-shi, Shiga 520-0101 (JP)
(72) Inventor: FUJIWARA, Kunio, Otsu-shi, Shiga 520-0101 (JP)
(74) Representative: Müller Hoffmann & Partner
(86) International application number: PCT/JP2024/018387
(87) International publication number: WO 2025/238864

(56) References cited:
- JP-A- 2001 118 158
- JP-A- 2001 118 158
- JP-A- 2009 182 445
- JP-A- 2009 182 445
- JP-A- 2014 010 336
- KR-B1- 102 184 295
- US-A1- 2012 319 596

## Description

### Technical Field

The present invention relates to a monitoring device used for crime prevention and the like.

### Background Art

As a monitoring device of this type, as disclosed in Patent Literature 1, there is a monitoring device including an infrared human detection sensor that detects an intruder, an image sensor for capturing an image of the detected intruder, and an infrared illumination light source that emits infrared light for illumination in order to ensure brightness for imaging by the image sensor even at nighttime.

Prior art examples also include:
JP 2009 182445 A which discloses an imaging device that uses multiple selectively controllable infrared light sources to illuminate and capture modulated-light images, adjusting illumination based on the position and size of detected face regions in the image.

US 2012/319596 A1 which discloses an illumination control system that uses a camera to segment the captured image into areas corresponding to multiple individually dimmable illumination apparatuses and controls the relevant lights based on detected person presence in those areas.

### Citation List

### Patent Literature

Patent Literature 1: JP 2001-118158 A

### Summary of Invention

### Technical Problem

In a case of the monitoring device having such a configuration, if there is a deviation between a detection range of the human detection sensor and an illumination range of the illumination light source, the intruder into the detection range cannot be illuminated with an appropriate light amount, and a problem that the intruder does not appear clearly in a captured image may occur.

However, since a person is not able to sense infrared light emitted from the human detection sensor and infrared light for illumination, it takes much time and effort to adjust directions of beams of the infrared light in order to physically correct the deviation between the detection range and the illumination range.

The present invention has been made in view of such a problem, and an object of the present invention is to be capable of illuminating an intruder with an appropriate light amount to obtain a clear captured image, while allowing a physical deviation between a detection range and an illumination range.

### Solution to Problem

That is, the present invention has the following configuration.
[1] A monitoring device including: a sensor module configured to detect a position of a person by using reflection of an invisible detection electromagnetic wave emitted to a detection range that is predetermined; a camera module; an illumination module configured to irradiate an illumination range with illumination light that is invisible, the illumination range corresponding to an imaging range of the camera module; and an information processing device, in which
   the illumination module is capable of irradiating each of divided illumination ranges with the illumination light with an individually independent illumination intensity, the divided illumination ranges being obtained by dividing the illumination range, and
   the information processing device includes a correspondence specification unit configured to compare a region indicating the each of divided illumination ranges in a captured image captured by the camera module with a region indicating a detection range of the sensor module in the captured image, and specify a portion of the detection range corresponding to each of divided illumination ranges.
[2] The monitoring device according to [1], in which
   the information processing device further includes:
   an image display unit configured to display the captured image on a display, and display the divided illumination ranges and the detection range to be superimposed on the captured image displayed on the display.
[3] The monitoring device according to [1] or [2], in which
   the information processing device includes:
   an illumination intensity setting unit configured to specify a divided illumination range corresponding to a detection position of a person detected by the sensor module, and control the illumination module to set an illumination intensity in the divided illumination range to a value corresponding to a distance to the person.
[4] The monitoring device according to [3], in which the illumination intensity setting unit is also configured to be able to set an illumination intensity of the each of divided illumination ranges to a value designated by an operator.
[5] The monitoring device according to [4], further including:
   a menu display unit configured to display, on a display, a setting menu for allowing an operator to designate an illumination intensity, in which
   the setting menu displayed by the menu display unit is configured to enable selection of either an automatic setting mode or a manual setting mode, the automatic setting mode being a mode in which an illumination intensity to be set by the illumination intensity setting unit is set to a value corresponding to a distance to a detected person, and the manual setting mode being a mode in which the illumination intensity is set to a value designated by an operator.
[6] The monitoring device according to [5], in which in the setting menu, selection of the automatic setting mode is prohibited for a divided illumination range outside the detection range.
[7] The monitoring device according to [5] or [6], in which the menu display unit displays the setting menus corresponding to respective divided illumination ranges to be arranged in a direction and an arrangement order same as an arrangement direction and an arrangement order of divided illumination ranges in a captured image displayed on the display.
[8] The monitoring device according to any one of [1] to [7], further including a detection range sensing jig configured to display a detection range of the sensor module in the captured image.

### Advantageous Effects of Invention

According to the present invention configured as described above, even if there is an unexpected physical deviation between the sensor module and the illumination module, a relationship between each portion of the sensor module and each divided illumination range is reliably associated using the detection range of the sensor module shown in the captured image. Therefore, it is possible to illuminate an intruder detected by the sensor module with an appropriate light amount in a divided illumination range corresponding to the detection position, and it is possible to obtain a clear captured image of the intruder.

### Brief Description of Drawings

FIG. 1 is a schematic diagram illustrating an overall configuration of a monitoring device according to an embodiment of the present invention.
FIG. 2 is a schematic diagram illustrating a detection range, an imaging range, and the like of the embodiment.
FIG. 3 is a functional block diagram illustrating functions of an information processing device of the embodiment.
FIG. 4 is a screen view illustrating a captured image displayed on a display, and divided illumination ranges and a detection range displayed so as to be superimposed on the captured image, in the embodiment.

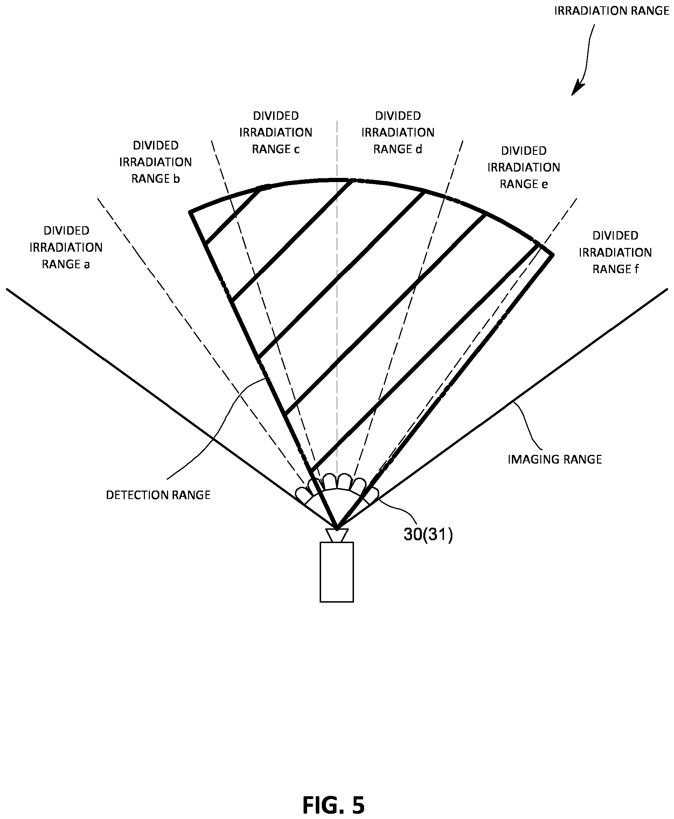

FIG. 5 is a schematic diagram illustrating an imaging range and divided illumination ranges in the embodiment.
FIG. 6 is a screen view for explaining a procedure for determining a detection range in the embodiment.
FIG. 7 is a flowchart for explaining an operation of the monitoring device of the embodiment.
FIG. 8 is a screen view illustrating a setting menu displayed on the display in comparison with a captured image, in the embodiment.
FIG. 9 illustrates a screen showing a captured image and a setting menu in another embodiment of the present invention.

### Description of Embodiment

A monitoring device in an embodiment of the present invention will be described with reference to the drawings. However, the present invention is not limited by the following description.

### [Configuration]

A monitoring device 100 of the present embodiment is used for security of various facilities such as business facilities such as offices, commercial facilities, airports, and stations, for example, and detects an intruder into a monitoring region preset indoors or outdoors and acquires an image of the intruder.

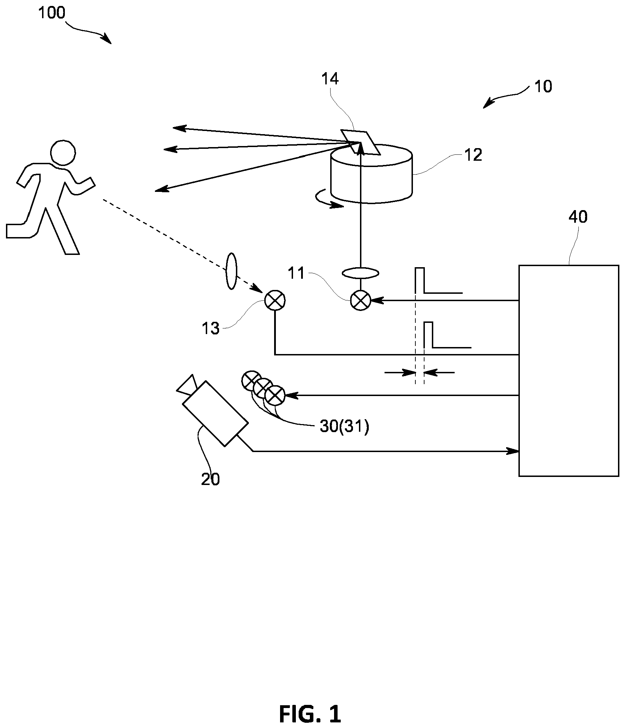

Specifically, as illustrated in FIG. 1, the monitoring device 100 includes a sensor module 10, a camera module 20, an illumination module 30, and an information processing device 40.

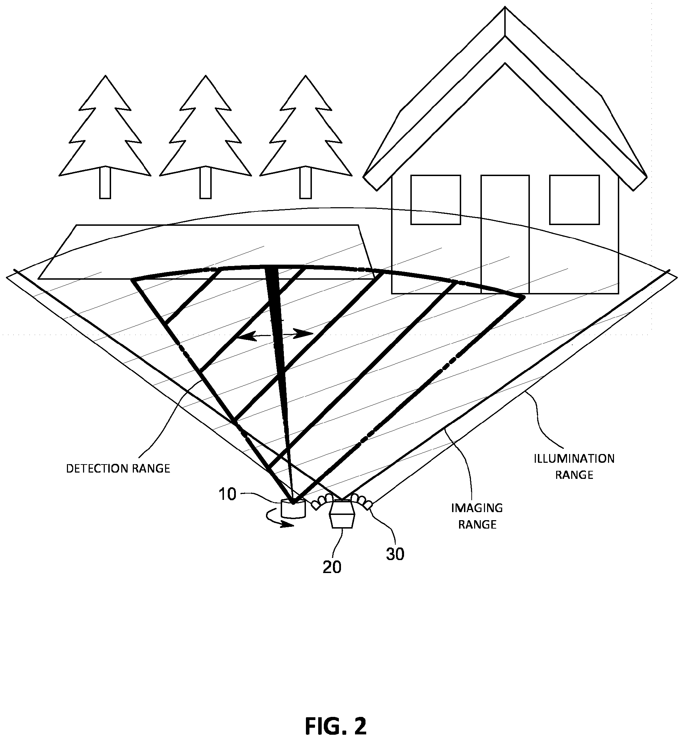

As illustrated in FIGS. 1 and 2, the sensor module 10 is for detecting a person who has intruded into a preset detection range.

The sensor module 10 emits an invisible detection electromagnetic wave such as radio waves or an infrared wave to the detection range, and detects a detection electromagnetic wave reflected by the person who has intruded into the detection range. The detection electromagnetic wave in this case is infrared laser light.

The sensor module 10 of the present embodiment is a LiDAR sensor, and specifically, as illustrated in FIG. 1, includes a laser light source 11, a scanning mechanism 12 that scans laser light emitted from the laser light source 11, and a photodetector 13 that receives reflected light reflected by an object located in the detection range.

The laser light source 11 is, for example, a semiconductor laser light source, and emits pulsed laser light in this case.

As illustrated in FIG. 1, the scanning mechanism 12 scans laser light emitted from the light source 11 along the detection range. As illustrated in FIG. 1, the scanning mechanism 12 of the present embodiment includes a mirror 14 that reflects the laser light emitted from the light source 11, and rotates the mirror 14 around a predetermined axis.

More specifically, the mirror 14 is provided in an orientation inclined with respect to the laser light emitted from the light source 11, and rotates the mirror 14 around a predetermined rotation axis to scan the laser light along the detection range.

Note that the scanning mechanism 12 may be configured to rotate the light source 11 around a predetermined rotation axis to scan light emitted from the light source 11 along the detection range, and the scanning mechanism 12 in this case may not include the mirror 14. Furthermore, the scanning mechanism 12 may be configured using a MEMS mirror.

As illustrated in FIGS. 1 and 2, the photodetector 13 detects reflected light reflected by an object present within the detection range, and outputs a detection signal indicating the detection to the information processing device 40 described later.

The photodetector 13 of the present embodiment receives laser light, and is, for example, a photodiode such as an avalanche photodiode (APD). However, the photodetector 13 is not necessarily limited thereto, and may be appropriately changed according to a type of the light source 11, for example. Note that the photodetector 13 may be configured to be able to detect an angle, by using a plurality of reception antennas and detecting a phase difference between individual antennas.

In order to prevent an existing object such as a building or a tree within the detection range from being detected as an object having intruded, the sensor module 10 described above is made to be able to determine that an object has intruded into the detection range by acquiring in advance a detection signal output from the photodetector 13 at a normal time when there is no intrusion of the object, and comparing normal-time information indicated by the detection signal at the normal time with monitoring information indicated by detection signals sequentially output from the photodetector 13 at the time of monitoring.

As illustrated in FIGS. 1 and 2, the camera module 20 images an object present in a preset imaging range, and specifically images an object that has intruded into the above-described detection range. Note that, as illustrated in FIG. 2, the imaging range is set to be wider than the detection range in this embodiment, but may be set to be slightly narrower than the detection range, or may be set as a region matching the detection range.

The camera module 20 continuously images the detection range regardless of whether an object has been detected by the sensor module 10 described above. In other words, the camera module 20 acquires and records a moving image of the detection range, and an exposure time at each imaging timing is maintained to be a constant time.

However, the camera module 20 may be, for example, a camera module that acquires a still image of the detection range at a timing when the sensor module 10 detects an object having intruded, or a camera module that acquires and records a moving image in a predetermined period before and after the timing.

In the camera module 20, an element that detects infrared light is used as a two-dimensional sensor (not illustrated) so that an object can be imaged even in a dark field at nighttime and the like.

The illumination module 30 is integrally attached to the camera module 20, and specifically, as illustrated in FIGS. 1 and 2, includes a plurality of infrared LEDs 31 which are light sources that emit infrared illumination light, which is invisible illumination light, to the detection range.

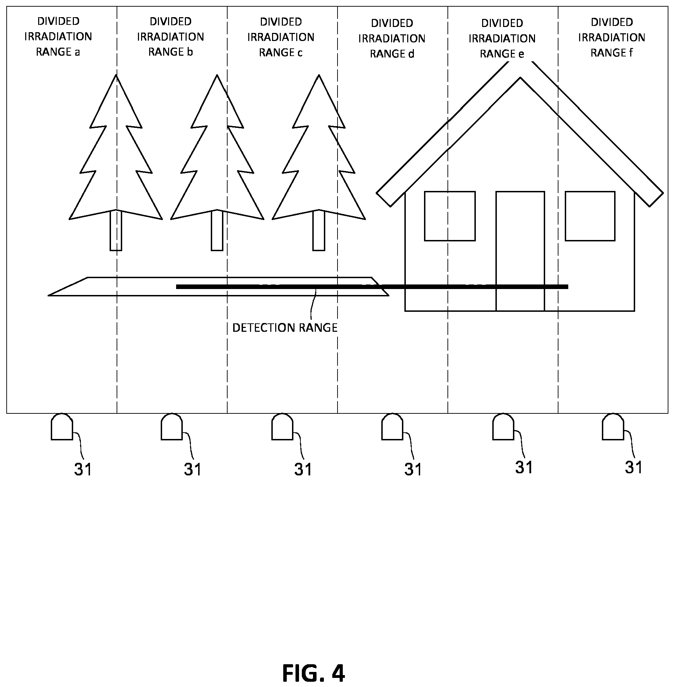

In the present embodiment, as illustrated in FIG. 2, the entire illumination range of these infrared LEDs 31 corresponds to the imaging range. As illustrated in FIG. 4 and the like, this illumination range is divided into a plurality of illumination ranges a to f (hereinafter, referred to as divided illumination ranges a to f), and an illumination intensity of each divided illumination range can be adjusted independently of the others by adjusting an output of each infrared LED 31.

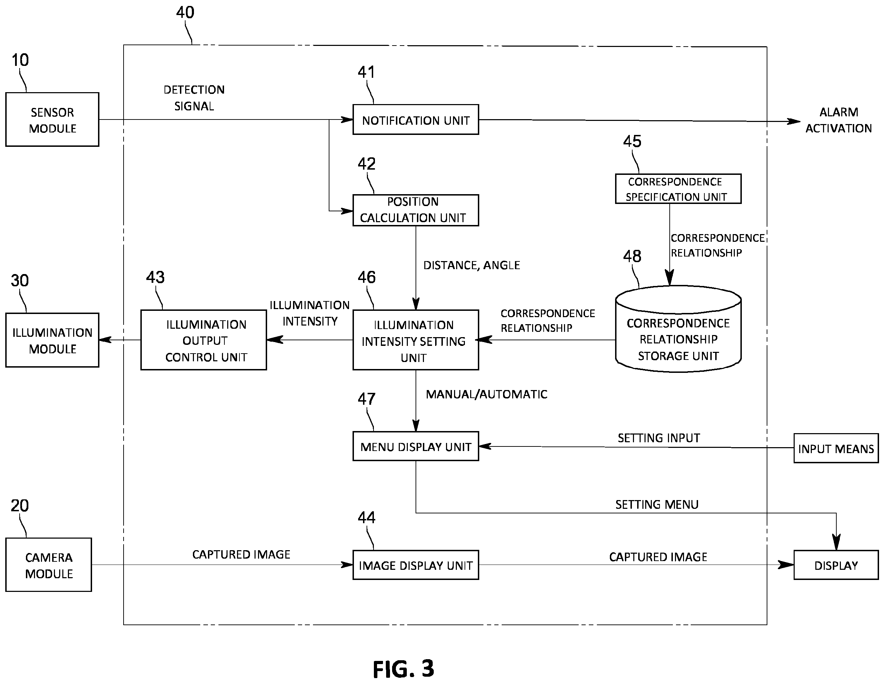

The information processing device 40 controls the sensor module 10, the camera module 20, and the illumination module 30, and physically includes a CPU, a memory, and the like. The information processing device 40 functionally exhibits functions as a notification unit 41, a position calculation unit 42, an illumination output control unit 43, an image display unit 44, a correspondence specification unit 45, an illumination intensity setting unit 46, a menu display unit 47, and the like as illustrated in FIG. 3, by cooperation of the CPU and peripheral devices thereof in accordance with a program for the monitoring device stored in the memory.

The notification unit 41 acquires a detection signal from the sensor module 10, and notifies a user that an object has intruded into the detection range.

Specifically, the notification unit 41 is configured to determine whether or not an object has intruded into the detection range by comparing the above-described normal-time information stored in the memory with the monitoring information indicated by detection signals sequentially transmitted from the sensor module 10.

Furthermore, the notification unit 41 may be configured to transmit a moving image or a still image obtained by the camera module 20 to the user at the time, when notifying that the object has intruded into the detection range.

The position calculation unit 42 acquires a detection signal from the sensor module 10, and calculates position information indicating a detection position of the object on the basis of the detection signal.

This position information is information indicating coordinates as the detection position of the object, and is information including a detection distance, which is a distance from the sensor module 10 to the object, and a detection angle of the object with respect to the sensor module 10.

The position calculation unit 42 of the present embodiment is physically configured using a time of flight (TOF) circuit or the like, and calculates the distance to the detected object by measuring a time from when the light source 11 emits a pulse of laser light to when the laser light is reflected by the object and received, and converting the measured time into a distance.

In addition, the position calculation unit 42 of the present embodiment acquires the detection angle of the detected object on the basis of an angle of the laser light received by the photodetector 13.

The illumination output control unit 43 controls power supplied to each of the infrared LEDs 31, to control an output (luminescence intensity) of the infrared LEDs 31. Note that luminescence includes not only continuous luminescence but also intermittent luminescence such as PWM.

The image display unit 44 displays a captured image obtained by the camera module 20 on a display (not illustrated), and displays the divided illumination ranges and the detection range to be superimposed on the captured image displayed on the display.

First, regarding the divided illumination ranges, the illumination module 30 is integrated with the camera module 20 as described above, and a region of each divided illumination range of the illumination module 30 occupied in the captured image is certain known information. Therefore, in accordance with the known information, the image display unit 44 displays each divided illumination range in the captured image in a state where each divided illumination range is sectioned with a dotted line or the like, for example, as illustrated in FIG. 4 and the like.

Next, regarding the detection range, since an attachment position and orientation of the sensor module 10 with respect to the camera module 20 is adjustable, or the attachment position and orientation may deviate, a region of a human detection range of the sensor module 10 occupied in the captured image is not constant. Therefore, in this case, for example, the detection range in the captured image is set by the following method.

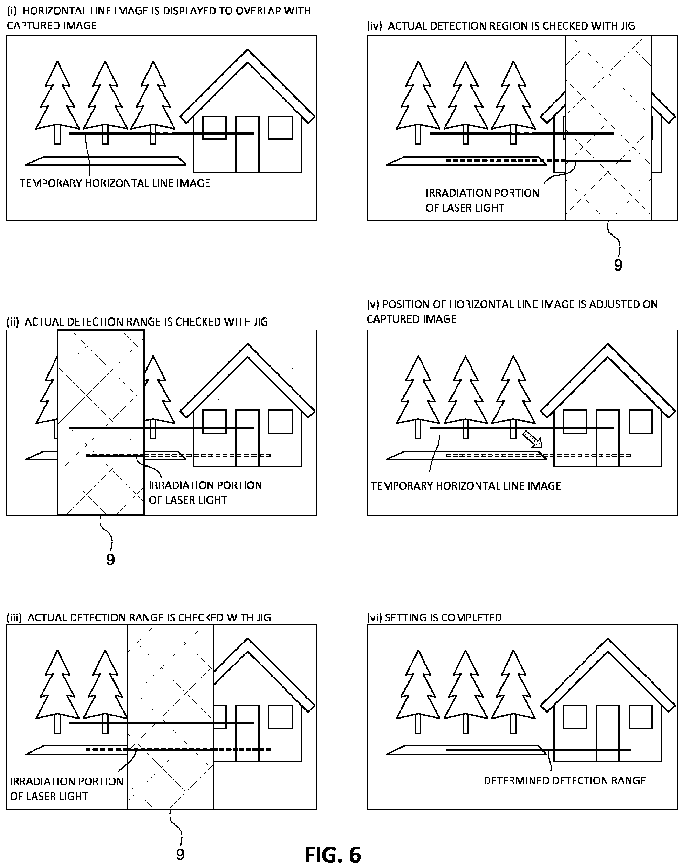

As illustrated in FIG. 6, first, the image display unit 44 temporarily displays the detection range as a horizontal line image at a predetermined initial position on the captured image on the display.

From this state, a detection range sensing jig 9 that reflects infrared rays is installed in front of the camera module 20. As a result, an irradiation portion of the detection range sensing jig 9 with the laser light is displayed on the captured image on the display. This irradiation portion indicates an actual detection range of the laser light.

Note that, in FIG. 6, the detection range sensing jig 9 has an elongated rod shape, and an operator vertically holds and moves the detection range sensing jig 9 to the left and right so that the irradiation portion of the laser light is displayed on the captured image on the display in a scanning manner. However, the detection range sensing jig may have a plate shape so that the irradiation portion of the laser light is displayed on the captured image all at once.

Next, when the operator moves the temporary horizontal line image displayed on the image display unit so as to overlap with the irradiation portion, and performs a determination operation, the detection range in the captured image is determined.

Note that, the detection range on the captured image may be automatically determined by causing an information processing apparatus to perform image processing on the captured image in which the irradiation portion of the laser light is displayed, to cause the detection range of the laser light on the captured image to be recognized.

The correspondence specification unit 45 compares a region indicating the each of divided illumination ranges in the captured image with a region indicating the determined detection range in the captured image, and specifies a portion of the detection range corresponding to the each of divided illumination ranges.

Here, the correspondence specification unit 45 compares an X coordinate of the detection range in the captured image illustrated in FIG. 4 with an X coordinate of each of the divided illumination ranges, specifies a portion of the detection range corresponding to each of the divided illumination ranges with the X coordinate of the captured image, and stores this relationship in a correspondence relationship storage unit 48 provided in a predetermined region of the memory.

For example, for the portion of the detection range corresponding to the divided illumination range c, a relationship such as 150 to 200 in terms of the X coordinate (or a pixel number in the X direction) of the captured image is stored in the correspondence relationship storage unit 48.

The illumination intensity setting unit 46 specifies a portion of the detection range including the position of the intruder detected by the sensor module 10, and specifies a divided illumination range corresponding to the portion of the detection range with reference to the correspondence relationship stored in the correspondence relationship storage unit 48. Then, an illumination intensity in the divided illumination range is set to a value corresponding to a distance to the object, by controlling the illumination module 30. Specifically, the illumination intensity is set to be lower as the distance is shorter.

In addition, the illumination intensity setting unit 46 is configured to be able to set the illumination intensity of the each of divided illumination ranges to a manually set value.

The menu display unit 47 displays, on the display, a menu. In the menu, either an automatic setting mode to use a value corresponding to the distance to the detected object or a manual setting mode to use a value designated by the operator can be selected for the illumination intensity setting operation of the illumination intensity setting unit 46.

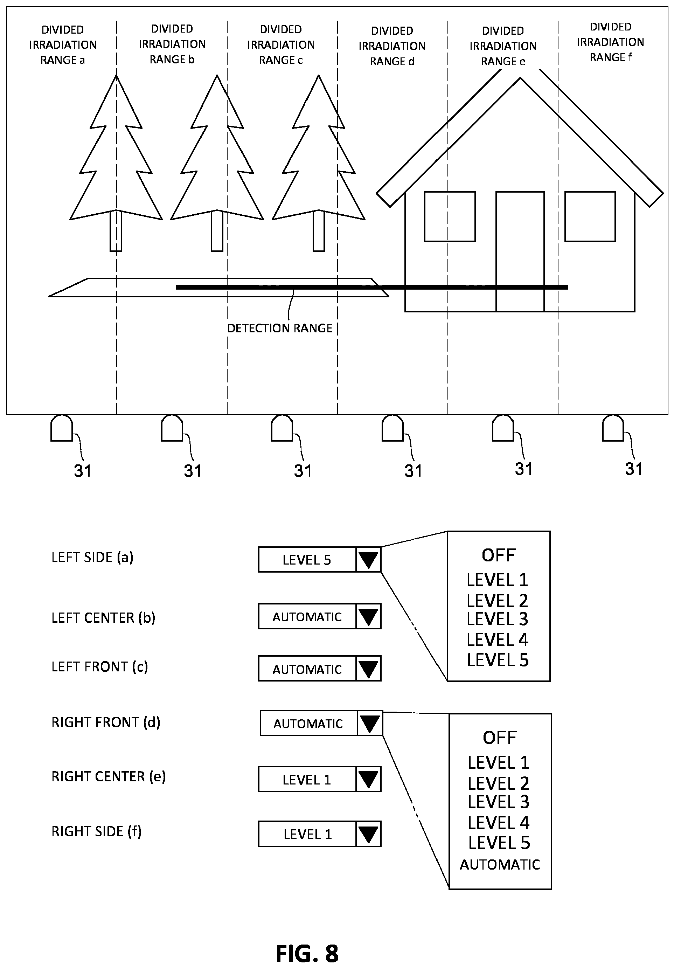

As illustrated in FIG. 8 and the like, this menu is displayed for each divided illumination range. In a case of the manual setting mode, the menu is configured to allow the operator to select the illumination intensity from a plurality of predetermined levels (here, for example, six levels from OFF to Level 5). In addition, a selection field of "automatic" is also displayed in this menu, and the automatic setting mode is set when the operator selects this selection field. The selection by the operator is performed via an input means such as a mouse or a keyboard.

However, among the individual divided illumination ranges, for those that do not overlap with the detection range or those that overlap with the detection range but have an overlapping portion of a certain ratio (for example, half) or less, the selection field of "automatic" is not displayed in the setting menu or cannot be selected even when displayed.

### [Operation]

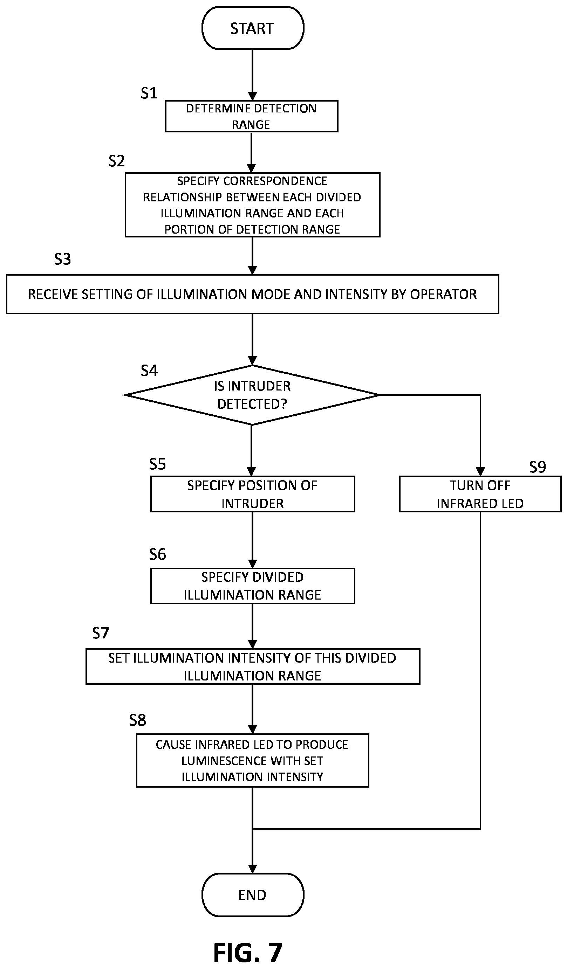

Next, an example of an operation of the monitoring device 100 having the above-described configuration will be described with reference to a flowchart of FIG. 7.

First, initial setting is performed.

In this initial setting, the detection range of the sensor module 10 is determined by actual measurement in the above-described procedure (step S1). As a result, the correspondence specification unit 45 specifies a correspondence relationship between each divided illumination range and each portion of the detection range (step S2), and stores the correspondence relationship in the correspondence relationship storage unit 48.

Next, the operator sets the illumination intensity to the automatic setting mode or the manual setting mode for each divided illumination range, through the setting menu displayed on the display. Further, in the manual setting mode, the operator sets the illumination intensity (step S3).

After the above initial setting is completed, the monitoring device 100 is operated.

When an intruder intrudes the detection range (step S4), the sensor module 10 outputs a detection signal, and the position calculation unit 42 calculates a position of the intruder, that is, a distance and an angle in this case from the detection signal (step S5).

Next, the illumination intensity setting unit 46 specifies a divided illumination range corresponding to the position of the intruder detected by the sensor module 10 with reference to the correspondence relationship storage unit 48 (step S6).

Next, the illumination intensity setting unit 46 sets the illumination intensity of the specified divided illumination range to a value specified in the setting menu (step S7). For example, in the automatic setting mode, the illumination intensity setting unit 46 sets the illumination intensity according to the distance of the intruder. In the manual setting mode, the illumination intensity is set to the designated illumination intensity.

Next, in accordance with the illumination intensity set by the illumination intensity setting unit 46, the illumination output control unit 43 determines power to be supplied to the infrared LED 31 corresponding to the divided illumination range, and causes the infrared LED 31 to produce luminescence (step S8). Note that, in a case where no intruder is detected, the infrared LED 31 is not lit (step S9).

Otherwise, the notification unit 41 notifies that an object has intruded into the detection range, and records a moving image or a still image obtained by the camera module 20 or transmits the moving image or the still image to the terminal used by the user.

### [Effects]

According to the monitoring device 100 configured as described above, even if an unexpected physical deviation occurs between the sensor module 10 and the illumination module 30 due to, for example, a deviation in attachment angle or the like, and the correspondence relationship between the divided illumination ranges and the detection range changes, the relationship between each of the divided illumination ranges and each portion of the detection range can be newly and easily associated using the captured image captured by the camera module 20.

Therefore, when an intruder is detected, the divided illumination range reliably corresponding to a position of the intruder is set, and the divided illumination range is irradiated with light with an intensity appropriate for imaging, so that the intruder can be clearly imaged.

### [Other embodiments]

Note that the present invention is not limited to the above-described embodiment.

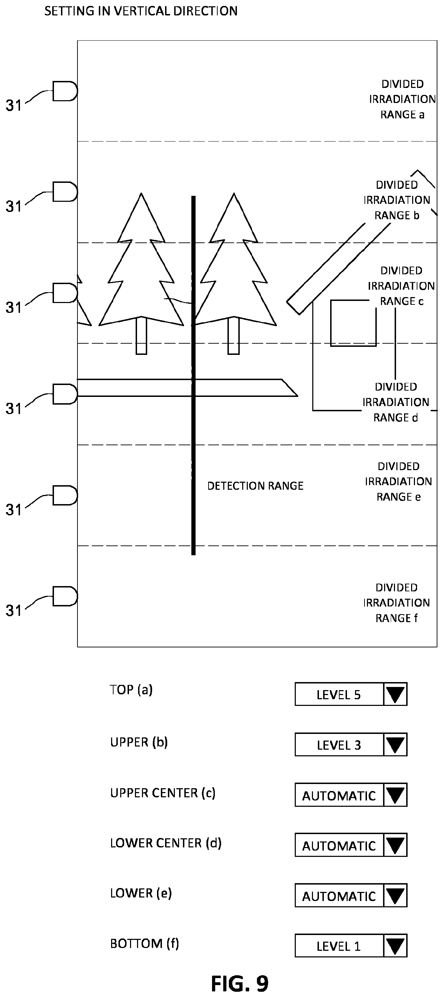

For example, in the above-described embodiment, since the divided illumination ranges in the captured image are arranged in the horizontal direction, the setting menus of the menu display unit are arranged in the horizontal direction so as to correspond to the arrangement direction of the divided illumination ranges, in the same arrangement order. However, for example, when the camera modules are arranged longitudinally and the divided illumination ranges are arranged in upper and lower positions, the setting menus may be arranged in an up-down direction so as to automatically correspond to the arrangement direction of the divided illumination ranges as illustrated in FIG. 9. In addition, notation of each divided illumination range may also be automatically changed to notation corresponding to the upper and lower positions. This makes it easy for the user to use.

In addition, at the time of setting the illumination intensity in the setting menu, brightness or color of the divided illumination range being set may be changed in the captured image displayed on the display, to make it easy for the operator to visually recognize which divided illumination range is being set.

Furthermore, in the automatic setting mode, the illumination intensity setting unit may set the illumination intensity in accordance with not only the distance of the intruder but also the detection range (detection angle) occupied by the intruder. As an example of this case, the illumination intensity can be increased when the detection angle is large.

The sensor module is a LiDAR sensor in the above-described embodiment, but may be a RaDAR sensor that emits radio waves to the detection range and detects radio waves returned after being reflected by an object intruding the detection range.

In addition, the sensor module includes an emitter that emits an electromagnetic wave such as a millimeter wave or a microwave, for example. A distance measuring method is, for example, FMCW, and an angle control method is, for example, MIMO, a phased array, or the like. In this case, the scanning mechanism 12 may be a mechanical scanning method or an electronic scanning method. Specific examples of the electronic scanning method include a method of synthesizing signals of a plurality of reception antennas with phases changed with hardware or software.

As the illumination module, in the above-described embodiment, each divided illumination range is individually illuminated by a separate infrared LED. However, a single infrared LED may be adopted, and the single infrared LED may be scanned with a movable mirror or the like as in the sensor module.

The invention is defined by the appended claims.

### Industrial Applicability

According to the present invention, even if there is an unexpected physical deviation between the sensor module and the illumination module, a relationship between each portion of the sensor module and each divided illumination range is reliably associated using the detection range of the sensor module shown in the captured image. Therefore, it is possible to illuminate an intruder detected by the sensor module with an appropriate light amount in a divided illumination range corresponding to the detection position, and it is possible to obtain a clear captured image of the intruder.

### Reference Signs List

- 100: monitoring device
- 10: sensor module
- 20: camera module
- 30: illumination module
- 40: information processing device
- 44: image display unit
- 45: correspondence specification unit
- 46: illumination intensity setting unit
- 47: menu display unit
- a to f: divided illumination range

## Claims

1. A monitoring device comprising: a sensor module configured to detect a position of a person by using reflection of an invisible detection electromagnetic wave emitted to a detection range that is predetermined; a camera module; an illumination module configured to irradiate an illumination range with illumination light that is invisible, the illumination range corresponding to an imaging range of the camera module; and an information processing device, wherein
the illumination module is capable of irradiating each of divided illumination ranges with the illumination light with an individually independent illumination intensity, the divided illumination ranges being obtained by dividing the illumination range, and
**characterized in that**
the information processing device includes a correspondence specification unit configured to compare a region indicating the each of divided illumination ranges in a captured image captured by the camera module with a region indicating a detection range of the sensor module in the captured image, and specify a portion of the detection range corresponding to each of divided illumination ranges.

2. The monitoring device according to claim 1, wherein the information processing device further comprises:
an image display unit configured to display the captured image on a display, and display the divided illumination ranges and the detection range to be superimposed on the captured image displayed on the display.

3. The monitoring device according to claim 1, wherein
the information processing device includes:
an illumination intensity setting unit configured to specify a divided illumination range corresponding to a detection position of a person detected by the sensor module, and control the illumination module to set an illumination intensity in the divided illumination range to a value corresponding to a distance to the person.

4. The monitoring device according to claim 3, wherein the illumination intensity setting unit is also configured to be able to set an illumination intensity of the each of divided illumination ranges to a value designated by an operator.

5. The monitoring device according to claim 4, further comprising:
a menu display unit configured to display, on a display, a setting menu for allowing an operator to designate an illumination intensity, wherein
the setting menu displayed by the menu display unit is configured to enable selection of either an automatic setting mode or a manual setting mode, the automatic setting mode being a mode in which an illumination intensity to be set by the illumination intensity setting unit is set to a value corresponding to a distance to a detected person, and the manual setting mode being a mode in which the illumination intensity is set to a value designated by an operator.

6. The monitoring device according to claim 5, wherein in the setting menu, selection of the automatic setting mode is prohibited for a divided illumination range outside the detection range.

7. The monitoring device according to claim 5, wherein the menu display unit displays the setting menus corresponding to respective divided illumination ranges to be arranged in a direction and an arrangement order same as an arrangement direction and an arrangement order of divided illumination ranges in a captured image displayed on the display.

8. The monitoring device according to claim 1, further comprising: a detection range sensing jig configured to display a detection range of the sensor module in the captured image.

## Patentansprüche

1. Überwachungsvorrichtung, aufweisend: ein Sensormodul, das konfiguriert ist, um eine Position einer Person unter Verwendung einer Reflexion einer unsichtbaren elektromagnetischen Detektionswelle zu detektieren, die in einen Detektionsbereich emittiert wird, der vorbestimmt ist; ein Kameramodul; ein Beleuchtungsmodul, das konfiguriert ist, um einen Beleuchtungsbereich mit Beleuchtungslicht zu bestrahlen, das unsichtbar ist, wobei der Beleuchtungsbereich einem Abbildungsbereich des Kameramoduls entspricht; und eine Informationsverarbeitungsvorrichtung, wobei
das Beleuchtungsmodul in der Lage ist, jeden der geteilten Beleuchtungsbereiche mit dem Beleuchtungslicht mit einer individuell unabhängigen Beleuchtungsintensität zu bestrahlen, wobei die geteilten Beleuchtungsbereiche durch Teilen des Beleuchtungsbereichs erhalten werden, und
**dadurch gekennzeichnet, dass**
die Informationsverarbeitungsvorrichtung eine Entsprechungsspezifikationseinheit aufweist, die konfiguriert ist, um einen Bereich, der jeden der geteilten Beleuchtungsbereiche in einem erfassten Bild angibt, das durch das Kameramodul erfasst wird, mit einem Bereich zu vergleichen, der einen Detektionsbereich des Sensormoduls in dem erfassten Bild angibt, und einen Abschnitt des Detektionsbereichs zu spezifizieren, der jedem der geteilten Beleuchtungsbereiche entspricht.

2. Überwachungsvorrichtung nach Anspruch 1, wobei
die Informationsverarbeitungsvorrichtung ferner aufweist:
eine Bildanzeigeeinheit, die konfiguriert ist, um das erfasste Bild auf einer Anzeige anzuzeigen und die geteilten Beleuchtungsbereiche und den Detektionsbereich anzuzeigen, um auf dem erfassten Bild überlagert zu werden, das auf der Anzeige angezeigt wird.

3. Überwachungsvorrichtung nach Anspruch 1, wobei
die Informationsverarbeitungsvorrichtung umfasst:
eine Beleuchtungsintensitätseinstelleinheit, die konfiguriert ist, um einen geteilten Beleuchtungsbereich zu spezifizieren, der einer Detektionsposition einer Person entspricht, die durch das Sensormodul detektiert wird, und das Beleuchtungsmodul zu steuern, um eine Beleuchtungsintensität in dem geteilten Beleuchtungsbereich auf einen Wert einzustellen, der einem Abstand zu der Person entspricht.

4. Überwachungsvorrichtung nach Anspruch 3, wobei die Beleuchtungsintensitätseinstelleinheit auch konfiguriert ist, um in der Lage zu sein, eine Beleuchtungsintensität jedes der geteilten Beleuchtungsbereiche auf einen Wert einzustellen, der durch einen Bediener bestimmt wird.

5. Überwachungsvorrichtung nach Anspruch 4, ferner aufweisend:
eine Menüanzeigeeinheit, die konfiguriert ist, um auf einer Anzeige ein Einstellmenü anzuzeigen, um es einem Bediener zu ermöglichen, eine Beleuchtungsintensität zu bestimmen, wobei
das Einstellmenü, das durch die Menüanzeigeeinheit angezeigt wird, konfiguriert ist, um eine Auswahl entweder eines automatischen Einstellmodus oder eines manuellen Einstellmodus zu ermöglichen, wobei der automatische Einstellmodus ein Modus ist, in dem eine Beleuchtungsintensität, die durch die Beleuchtungsintensitätseinstelleinheit einzustellen ist, auf einen Wert eingestellt wird, der einem Abstand zu einer detektierten Person entspricht, und der manuelle Einstellmodus ein Modus ist, in dem die Beleuchtungsintensität auf einen Wert eingestellt wird, der durch einen Bediener bestimmt wird.

6. Überwachungsvorrichtung nach Anspruch 5, wobei in dem Einstellmenü eine Auswahl des automatischen Einstellmodus für einen geteilten Beleuchtungsbereich außerhalb des Detektionsbereichs verboten ist.

7. Überwachungsvorrichtung nach Anspruch 5, wobei die Menüanzeigeeinheit die Einstellmenüs anzeigt, die jeweiligen geteilten Beleuchtungsbereichen entsprechen, die in einer Richtung und einer Anordnungsreihenfolge anzuordnen sind, die gleich einer Anordnungsrichtung und einer Anordnungsreihenfolge von geteilten Beleuchtungsbereichen in einem erfassten Bild ist, das auf der Anzeige angezeigt wird.

8. Überwachungsvorrichtung nach Anspruch 1, ferner aufweisend: ein Detektionsbereichserfassungs-Jig, das konfiguriert ist, um einen Detektionsbereich des Sensormoduls in dem erfassten Bild anzuzeigen.

## Revendications

1. Dispositif de surveillance comprenant : un module capteur configuré pour détecter une position d'une personne en utilisant la réflexion d'une onde électromagnétique invisible de détection émise vers une plage de détection qui est prédéterminée ; un module caméra ; un module d'éclairage configuré pour exposer une plage d'éclairage à une lumière d'éclairage qui est invisible, la plage d'éclairage correspondant à une plage de formation d'images du module caméra ; et un dispositif de traitement d'informations, dans lequel
le module d'éclairage est apte à exposer chacune des plages d'éclairage divisées à la lumière d'éclairage suivant une intensité d'éclairage individuellement indépendante, les plages d'éclairage divisées étant obtenues en divisant la plage d'éclairage, et
**caractérisé en ce que**
le dispositif de traitement d'informations inclut une unité de spécification de correspondance configurée pour comparer une région indiquant chacune des plages d'éclairage divisées dans une image capturée, capturée par le module caméra, avec une région indiquant une plage de détection du module capteur dans l'image capturée, et spécifier une partie de la plage de détection correspondant à chacune des plages d'éclairage divisées.

2. Dispositif de surveillance selon la revendication 1, dans lequel
le dispositif de traitement d'informations comprend en outre :
une unité d'affichage d'image configurée pour afficher l'image capturée sur un écran, et afficher les plages d'éclairage divisées et la plage de détection afin des les superposer sur l'image capturée affichée à l'écran.

3. Dispositif de surveillance selon la revendication 1, dans lequel
le dispositif de traitement d'informations inclut :
une unité de réglage d'intensité d'éclairage configurée pour spécifier une plage d'éclairage divisée correspondant à une position de détection d'une personne détectée par le module capteur, et commander le module d'éclairage pour régler une intensité d'éclairage dans la plage d'éclairage divisée sur une valeur correspondant à une distance à la personne.

4. Dispositif de surveillance selon la revendication 3, dans lequel l'unité de réglage d'intensité d'éclairage est également configurée pour pouvoir régler une intensité d'éclairage de chacune des plages d'éclairage divisées sur une valeur désignée par un opérateur.

5. Dispositif de surveillance selon la revendication 4, comprenant en outre :
une unité d'affichage de menu configurée pour afficher, sur un écran, un menu de réglage pour permettre à un opérateur d'indiquer une intensité d'éclairage, dans lequel
le menu de réglage affiché par l'unité d'affichage de menu est configuré pour permettre la sélection soit d'un mode de réglage automatique, soit d'un mode de réglage manuel, le mode de réglage automatique étant un mode dans lequel une intensité d'éclairage à régler par l'unité de réglage d'intensité d'éclairage est réglée sur une valeur correspondant à une distance à une personne détectée, et le mode de réglage manuel étant un mode dans lequel l'intensité d'éclairage est réglée sur une valeur indiquée par un opérateur.

6. Dispositif de surveillance selon la revendication 5, dans lequel, dans le menu de réglage, la sélection du mode de réglage automatique est interdite pour une plage d'éclairage divisée en dehors de la plage de détection.

7. Dispositif de surveillance selon la revendication 5, dans lequel l'unité d'affichage de menu affiche les menus de réglage correspondant à des plages d'éclairage divisées respectives à agencer dans une direction et un ordre d'agencement identiques à une direction d'agencement et à un ordre d'agencement de plages d'éclairage divisées dans une image capturée affichée sur l'écran.

8. Dispositif de surveillance selon la revendication 1, comprenant en outre : un gabarit de détection de plage de détection configuré pour afficher une plage de détection du module capteur dans l'image capturée.
